# EUROPEAN PATENT SPECIFICATION

(11) **EP 2 407 682 B1**
(45) Date of publication and mention of the grant of the patent: **03.10.2012**
(21) Application number: 10169516.1
(22) Date of filing: 14.07.2010
(51) Int. Cl.: F16D 66/00, F16D 66/02

(54) **Wear indicator**
Verschleißanzeige
Indicateur d'usure

(43) Date of publication of application: 18.01.2012
(73) Proprietor: Friction Materials, 21509 Glinde (DE)
(72) Inventor: Karatas, Ilhami, 21509, Glinde (DE); Yildiz, Mustafa, 21509, Glinde (DE)
(74) Representative: TBK

(56) References cited:
- GB-A- 2 343 720
- JP-A- 2003 028 217
- JP-U- 3 102 627
- JP-U- 61 117 933

## Description

The invention relates to a mechanical wear indicator of a disc brake, which is adapted to be mounted in a corresponding recess of a pad supporting plate.

In the prior art, electrical wear indicators are already known. However, electrical wear indicators are expensive and have the problem that a secure electrical connection to the wear indicator has to be maintained at all times. Alternatively, audible mechanical wear indicators are known which comprise a free end that comes into contact with the brake disc of the disc brake when the brake lining is worn down to a certain extent. By coming into contact with the brake disc, the wear indicator generates an audible signal indicating the wear-down of the brake lining. The known wear indicators are usually cumbersomely mounted onto the respective brake discs, e.g. by welding or the like, which sometimes also have to be processed in a certain way in order to fit the respective wear indicator.

A wear indicator according to the preamble of claim 1 is for instance known from JP 61 117933u.

Therefore, it is the object of the invention to provide a mechanical wear indicator of a disc brake, which secures an audible signal for the wear-down of the brake lining of the disc brake and which can be mounted onto a pad supporting plate of the disc brake in an improved and easy way.

This object is achieved by the wear indicator having the features of claim 1. Advantageous further formations are subject of the dependent claims.

According to the invention, a wear indicator of a disc brake is provided, which is adapted to be mounted in a corresponding recess of a pad supporting plate, meaning that the recess has a shape corresponding to the wear indicator. The mechanical wear indicator comprises a substantially U-shaped spring clip which is formed to be captively engageable with the recess. The substantially U-shaped spring clip has an outer surface, an inner surface, a front surface and a rear surface. Here, the outer surface of the spring clip is to be at least partially contacted with the recess, and, in accordance with the substantially U-shaped spring clip, the front surface and the rear surface of the spring clip are opposite to each other. The wear indicator furthermore comprises an indicator portion which is connected to the spring clip and which extends from the front surface of the spring clip through a space spanned by the spring clip, i.e. through the void inner space of the U-shape, towards the rear surface of the spring clip so that a free end of the indicator portion protrudes beyond the rear surface of the spring clip. Thereby, as seen from a side view of the wear indicator inserted in the recess of the pad supporting plate, the free end of the indicator portion protrudes beyond one side of the pad supporting plate on the side of the brake lining attached to the pad supporting plate.

It is further preferable that the spring clip comprises a bent portion and two leg portions extending from the bent portion, respectively, thereby substantially providing the U-Shape of the spring clip. Here, it is furthermore preferable that the indicator portion extends from one of the leg portions of the spring clip and extends between the leg portions. That is, the indicator portion arises from a part of one of the leg portions and passes through in between both leg portions.

In the invention, it is advantageous that at least a part of the leg portion, from which the indicator portion extends, is straight. It is also preferable that the free ends of the leg portions are bent towards each other and contact each other. Here, the contacting of the free ends of the leg portions, which basically constitute the free ends of the U-shape of the spring clip, occurs at least when being inserted into the corresponding recess.

In order to achieve a symmetrical distribution of insertion force, the spring clip is preferably constructed symmetrically in its axial direction, which direction corresponds to its inserting direction into the recess of the pad supporting plate.

In a further preferential arrangement, the wear indicator further comprises supporting portions provided on the front surface and the rear surface of the spring clip, which supporting portions come into contact with a surface of the pad supporting plate when the wear indicator is inserted in the recess. Thereby, a secure insertion of the wear indicator into the pad supporting plate is given. Here, it can be advantageous that the supporting portions on the rear surface of the spring clip have a greater dimension than the other supporting portions.

In general, it can be advantageous if the wear indicator is integrally formed from a sheet by processing such as bending. Here, the sheet is, for example, a metal sheet such as a steel sheet or the like. However, the wear indicator can also be manufactured by any other kind of suitable forming technology.

In the following, an embodiment of this invention will be described with reference to the drawings, in which:
Fig. 1 is a perspective view of a mechanical wear indicator of a disc brake according to an embodiment of the invention;
Fig. 2 is a front view of the wear indicator of Fig. 1;
Fig. 3 is a side view of the wear indicator of Fig. 1;
Fig. 4 is a top view of the wear indicator of Fig. 1;
Fig. 5 is a front view of a brake pad assembly including the wear indicator of Fig. 1 inserted in a pad supporting plate of a disc brake;
Fig. 6 is a sectional side view of the brake pad assembly of Fig. 5 along a line B-B; and
Fig. 7 is a top view of the brake pad assembly of Fig. 5.

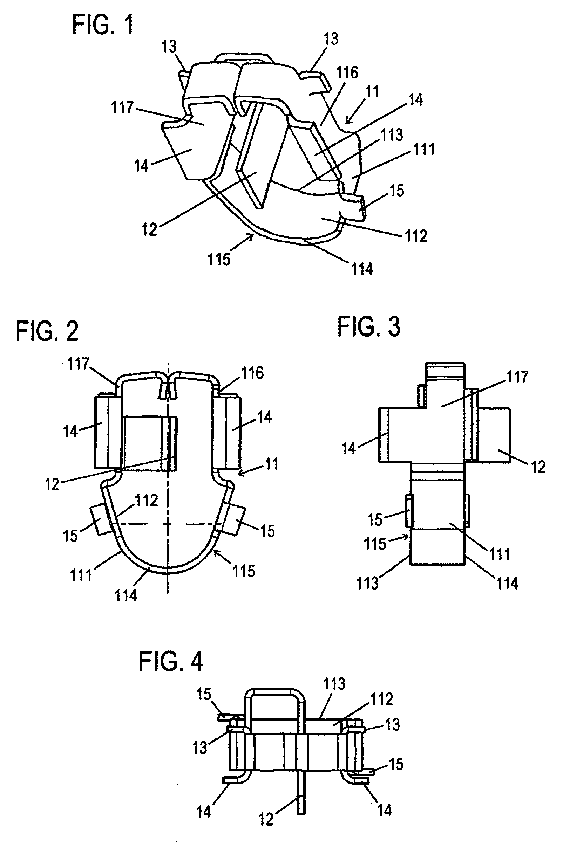

In Fig. 1, an embodiment of a wear indicator 1 in accordance with the invention is shown in a perspective view. Furthermore, Fig. 2 shows the wear indicator 1 in a front view, Fig. 3 shows the wear indicator 1 in a side view, and Fig. 4 shows the wear indicator 1 in a top view.

The wear indicator 1 basically consists of a spring clip 11, an indicator portion 12 and supporting portions 13, 14, 15. The spring clip 11 is substantially formed in a U-shape and has an outer surface 111, an inner surface 112, a front surface 113 and a rear surface 114. Furthermore, the spring clip 11 comprises a bent portion 115 on its lower end, from which two leg portions 116, 117 respectively extend upwards. The leg portions 116, 117 are bent on their free ends, i.e. the ends opposite to the ends of the leg portions 116, 117, which are connected to the bent portion 115. Here, as can be seen in Figs. 1 and 2, the free ends of the leg portions 116, 117 are substantially bent in an inverted U-shape, such that the free ends of the leg portions 116, 117 are directed towards the bent portion 115 of the spring clip 11. In this embodiment, the indicator portion 12 is connected to the spring clip 11 on its front surface 113. In particular, the indicator portion 12 extends from a straight part of the leg portion 117 in a bent way through a space spanned by the spring clip 11, i.e. spanned by the leg portions 116, 117, towards the rear surface 114 of the spring clip, so that a free end of the indicator portion 12 protrudes beyond the rear surface 114 of the spring clip 11, as can be seen in particular in Fig. 4.

The supporting portions 13, 14 are also connected to a straight part of each leg portion 116, 117 and extend in a bent way to the respective side away from the spring clip 11. Here, the supporting portions 14 on the rear surface 114 have a long dimension and extend almost entirely along the entire length of the respective straight part of the respective leg portion 116, 117. The supporting portions 13, on the other hand, are connected to the front surface 113 of the spring clip 11 and have a smaller dimension than the supporting portions 14. With the bigger dimension of the supporting portions 14 on the rear surface 114, a pushing force generated by a deflection force acting on the indicator portion 12 can be compensated more reliably. Further, the supporting portions 15 are connected to the bent portion 115 of the spring clip 11 in diagonally opposite positions. In particular, one supporting portion 15 is connected to the rear surface 114 of leg portion 116, and the other supporting portion 15 is connected to the front surface 113 of the other leg portion 117.

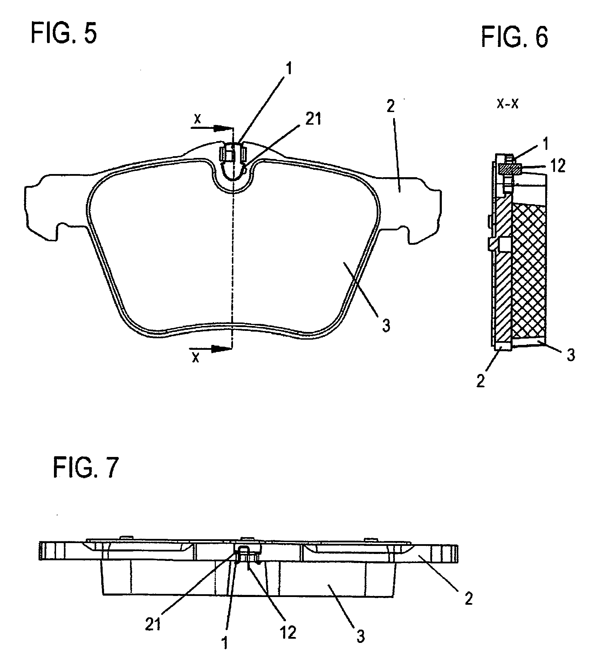

Figs. 5, 6 and 7 show a brake pad assembly in which the wear indicator 1 is inserted into a recess 21 in a pad supporting plate 2 of an overall disc brake system. As can be seen in the front view of the assembly in Fig. 5, the recess 2 has a shape corresponding to the substantial U-shape of the spring clip 11 of the wear indicator 1. Furthermore, as can be seen in Fig. 7, the recess 21 comprises a step basically halfway through the pad supporting plate 2 in a width direction. The wear indicator 1 is clipped into the narrow part of the recess 21, such that the supporting portions 13, 15 on the front surface 113 of the wear indicator 1 are in contact with the inner side of the step of the recess 21. The remaining supporting portions 14, 15 are in contact with the front surface of the pad supporting plate 2, onto which a brake lining 3 is attached.

The brake lining 3 has a cut-out on its upper edge in a way such that the recess 2 of the pad supporting plate 2 is exposed. In particular, as can be seen in Figs. 6 and 7, the cut-out in the brake lining 3 is provided in a way such that the indicator portion 12 of the wear indicator 1 protrudes into the cut-out of the brake lining 3. Thereby, when the brake lining 3 is worn down by braking operations of the disc brake system and the brake disc approaches the pad supporting plate 2, the indicator portion 12 can come into contact with the brake disc. Thus, the indicator portion 12 can be oscillated, thereby generating a sound signal indicative of the wear-down of the brake lining 3.

## Claims

1. Wear indicator (1) of a disc brake, which is adapted to be mounted in a corresponding recess (21) of a pad supporting plate (2), wherein the wear indicator (1) comprises
a substantially U-shaped spring clip (11) formed to be captively engageable with the recess (21) and comprising an outer surface (111) to be at least partially contacted with the recess (21), an inner surface (112), a front surface (113) and a rear surface (114) wherein the front surface (113) and the rear surface (114) are opposite to each other, **characterised in that**
an indicator portion (12) is connected to the spring clip (11) and extending from the front surface (113) through a space spanned by the spring clip (11) towards the rear surface (114) so that a free end of the indicator portion (12) protrudes beyond the rear surface (114) of the spring clip (11).

2. Wear indicator (1) according to claim 1, wherein the spring clip (11) comprises a bent portion (115) and two leg portions (116, 117) extending from the bent portion (115), respectively.

3. Wear indicator (1) according to claim 2, wherein the indicator portion (12) extends from one of the leg portions (116, 117) of the spring clip (11) and extends between the leg portions (116, 117).

4. Wear indicator (1) according to claim 2, wherein at least a part of the leg portion (117), from which the indicator portion (12) extends, is straight.

5. Wear indicator (1) according to one of claims 2 to 4, wherein the free ends of the leg portions (116, 117) are bent towards each other and contact each other.

6. Wear indicator (1) according to one of the preceding claims, wherein the spring clip (11) is constructed axially symmetrically.

7. Wear indicator (1) according to one of the preceding claims, wherein the wear indicator (1) further comprises supporting portions (13, 14, 15) provided on the front surface (113) and the rear surface (114) of the spring clip (11), which come into contact with a surface of the pad supporting plate (2) when the wear indicator (1) is inserted in the recess (21).

8. Wear indicator (1) according to claim 7, wherein the supporting portions (13) on the rear surface (114) of the spring clip (11) have a greater dimension than the other supporting portions (14).

9. Wear indicator (1) according to one of the preceding claims, wherein the wear indicator (1) is integrally formed from a sheet by bending.

## Patentansprüche

1. Verschleißindikator (1) einer Scheibenbremse, der angepasst ist, um in einer entsprechenden Aussparung (21) einer Belagstützplatte (2) montiert zu werden, wobei der Verschleißindikator (1) folgendes aufweist:
einen im Wesentlichen U-förmigen Federclip (11), der ausgebildet ist, um gefangen mit der Aussparung (21) in Eingriff bringbar zu sein, und eine äußere Fläche (111), um wenigstens teilweise mit der Aussparung (21) in Kontakt bringbar zu sein, eine Innenfläche (112), eine vordere Fläche (113) und eine hintere Fläche (114) aufweist, wobei die vordere Fläche (113) und die hintere Fläche (114) einander gegenüberliegen,
**dadurch gekennzeichnet, dass**
ein Indikatorabschnitt (12) mit dem Federclip (11) verbunden ist und sich von der vorderen Fläche (113) durch einen Raum, der durch den Federclip (11) aufgespannt ist, zu der hinteren Fläche (114) erstreckt, so dass ein freies Ende des Indikatorabschnitts (12) über die hintere Fläche (14) des Federclips (11) hinaus vorragt.

2. Verschleißindikator (1) nach Anspruch 1, wobei der Federclip (11) einen gebogenen Abschnitt (115) und zwei Schenkelabschnitte (116, 117) aufweist, die sich jeweils von dem gebogenen Abschnitt (115) aus erstrecken.

3. Verschleißindikator (1) nach Anspruch 2, wobei der Indikatorabschnitt (12) sich von einem von den Schenkelabschnitten (116, 117) des Federclips (11) aus erstreckt und sich zwischen den Schenkelabschnitten (116, 117) erstreckt.

4. Verschleißindikator (1) nach Anspruch 2, wobei wenigstens ein Teil des Schenkelabschnitts (117), von dem aus sich der Indikatorabschnitt (12) erstreckt, gerade ist.

5. Verschleißindikator (1) nach einem der Ansprüche 2 bis 4, wobei die freien Enden der Schenkelabschnitte (116, 117) zueinander hin gebogen sind und einander berühren.

6. Verschleißindikator (1) nach einem der vorangehenden Ansprüche, wobei der Federclip (11) axial symmetrisch gestaltet ist.

7. Verschleißindikator (1) nach einem der vorangehenden Ansprüche, wobei der Verschleißindikator (1) ferner Stützabschnitte (13, 14, 15) aufweist, die an der vorderen Fläche (113) und der hinteren Fläche (114) des Federclips (11) vorgesehen sind, die in Kontakt mit einer Fläche der Belagstützplatte kommen, wenn der Verschleißindikator (1) in die Aussparung (21) eingesetzt ist.

8. Verschleißindikator (1) nach Anspruch 7, wobei die Stützabschnitte (13) an der hinteren Fläche (114) des Federclips (11) eine größere Abmessung als die anderen Stützabschnitte (14) haben.

9. Verschleißindikator (1) nach einem der vorangehenden Ansprüche, wobei der Verschleißindikator (1) einstückig aus einem Bogen durch ein Biegen ausgebildet ist.

## Revendications

1. Indicateur d'usure (1) d'un frein à disque, qui est conçu pour être monté dans un évidement (21) correspondant d'une plaque de support de plaquette (2), l'indicateur d'usure (1) comprenant une pince à ressort (11) sensiblement en forme de U formée de manière à pouvoir s'engager de façon captive avec l'évidement (21) et comprenant une surface extérieure (111) devant être au moins partiellement mise en contact avec l'évidement (21), une surface intérieure (112), une surface avant (113) et une surface arrière (114), la surface avant (113) et la surface arrière (114) étant opposées l'une à l'autre, **caractérisé en ce qu'**une portion formant indicateur (12) est reliée à la pince à ressort (11) et s'étend à partir de la surface avant (113) à travers un espace couvert par la pince à ressort (11) en direction de la surface arrière (114), de telle sorte qu'une extrémité libre de la portion formant indicateur (12) fasse saillie au-delà de la surface arrière (114) de la pince à ressort (11).

2. Indicateur d'usure (1) selon la revendication 1, dans lequel la pince à ressort (11) comprend une portion courbe (115) et deux portions formant patte (116, 117) s'étendant à partir de la portion courbe (115), respectivement.

3. Indicateur d'usure (1) selon la revendication 2, dans lequel la portion formant indicateur (12) s'étend à partir de l'une des portions formant patte (116, 117) de la pince à ressort (11) et s'étend entre les portions formant patte (116, 117).

4. Indicateur d'usure (1) selon la revendication 2, dans lequel au moins une partie de la portion formant patte (117), à partir de laquelle s'étend la portion formant indicateur (12), est rectiligne.

5. Indicateur d'usure (1) selon l'une quelconque des revendications 2 à 4, dans lequel les extrémités libres des portions formant patte (116, 117) sont courbées en direction l'une de l'autre et sont en contact l'une avec l'autre.

6. Indicateur d'usure (1) selon l'une quelconque des revendications précédentes, dans lequel la pince à ressort (11) est de construction axialement symétrique.

7. Indicateur d'usure (1) selon l'une quelconque des revendications précédentes, dans lequel l'indicateur d'usure (1) comprend en outre des portions de support (13, 14, 15) situées sur la surface avant (113) et la surface arrière (114) de la pince à ressort (11), qui viennent en contact avec une surface de la plaque de support de plaquette (2) lorsque l'indicateur d'usure (1) est inséré dans l'évidement (21).

8. Indicateur d'usure (1) selon la revendication 7, dans lequel les portions de support (13) sur la surface arrière (114) de la pince à ressort (11) ont une dimension supérieure à celle des autres portions de support (14).

9. Indicateur d'usure (1) selon l'une quelconque des revendications précédentes, dans lequel l'indicateur d'usure (1) est formé d'un seul tenant à partir d'une feuille par cintrage.
